# EUROPEAN PATENT SPECIFICATION

(11) **EP 0 257 001 B1**
(45) Date of publication and mention of the grant of the patent: **13.01.1993**
(21) Application number: 87830304.9
(22) Date of filing: 31.07.1987
(51) Int. Cl.: C09K 5/06

(54) **A thermal accumulation process comprising the use of ternary mixtures of hydrate salts, and a device using said mixtures**
Verfahren zur Wärmespeicherung durch Verwendung von ternären Salzhydrat-Mischungen und Vorrichtung zur Verwendung dieser Mischungen
Procédé d'accumulation thermique par utilisation de mélanges ternaires d'hydrates salins et dispositif utilisant ces mélanges

(30) Priority: 31.07.1986 IT 4834086
(43) Date of publication of application: 24.02.1988
(73) Proprietor: Ente per le nuove tecnologie, l'energia e l'ambiente ( ENEA), I-00198 Roma (IT)
(72) Inventor: Rizzi, Giuseppe, I-21020 Varese (IT); Vaccarino, Carmelo, I-1020 Messina (IT)
(74) Representative: Sarpi, Maurizio

(56) References cited:
- EP-A- 0 054 758
- FR-A- 2 168 126
- US-A- 4 272 392
- US-A- 4 283 298
- SOLAR ENERGY, vol. 21, 1978, pages 61-63, Pergamon Press, GB; N. YONEDA et al.: "Eutectic mixtures for solar heat storage"

## Description

The present invention relates to the field of the alternative energies and specifically to the field sector which provides the solar energy exploitation.

The problem of the heat storage (thermal flywheel) is of particular importance whenever solar energy is utilized as a primary energetic source which energy is an intermittent one. It is obvious that whenever heat is stored during the active stage of the primary source and is released to the utilizing assembly when the same source is fading away, an optimum exploitation is achieved for the practical uses.

In order to solve said problem, several types of accumulation have been studied and proposed which however not always satisfy the operation requirements, efficiency and low cost as required by these kinds of plants.

One of the possible energy accumulation systems is based on the use of hydrate inorganic salts and on their latest heat of fusion.

The main difference between this type of accumulation and the more known systems at sensible heat comprising material masses with remarkable thermal inertia such as water tanks or rock layers or bricks is that heat (stored in the form of energy required for the fusion of the substance contained within the accumulation system) is released in the phase of discharge at a weel established temperature or better within a small temperature range which is centered around the fusion point of the same salt in as much as the transition solid-liquid, considered as a change of state, occurs at a constant temperature. Obviously at temperatures which are lower or greater than the melting point, the system behaves as a sensible heat accumulation. In any case, the heat portion which is stored in this way is scarce.

Another advantage, with respect to the above mentioned systems is the remarkable volume reduction of the accumulated volume at the same thermal capacity this being a consequence of the high energy density obtainable with the fused salts.

Notwithstanding all studies and experiments carried out during the past years, very few usable substances have been found and only two cases of valid use have been reported in the literature: the Glauber salt (Sodium sulphate decahydrate) in the USA and calciumchloride hexahydrate in France.

All the remaining substances or mixtures of substances proposed have shown not usable above all because of two disadvantageous phenomena such as the tendency to supercooling and the incongrous fusion which influence in a negative manner the accumulation capacity.

To obviate to such drawbacks, U.S.Pat. No. 4272352 discloses the use in a heat exchange process of a bynary mixture known per sè Mg(NO₃)₂6H₂O - MgCl₂H₂O which supercooling is avoided by adding a small quantity of additives (0,5% nucleation agents, among which NH₄NO₃ is cited).

U.S. Pat. No. 4 283298 discloses the use of numerous similar nucleation additives to avoid supercooling of a second binary mixture Mg(NO₃)₂. 6H₂O - NH₄NO₃ . However the melting points of the cited mixtures are of 59,1 °C and 52 °C respectively, which are not ideal in connection with the usual solar collectors which reach temperatures in a range between 50 -60 °C.

The problem related to the dangerous phenomenon of the supercooling of mixtures of hydrate salts has been solved by the invention which is the object of the Italian Patent No. 1210147 as filed on June 20, 1985 in the name of Carmelo Vaccarino the title of which is "A system for avoiding the supercooling phenomenon in mixtures of hydrate salts adapted for the heat accumulation".

The teaching of said patent is that in presence of two hydrated salts S1,S2, which melt congruosly at temperatures T1 ,T2 and that are able to form an eutectic E having a melting point Te lower than the above temperatures T1 and T2, it is possible to avoid that the tendency to supercooling of one of the salts is extended to eutectic E and to all intermediate mixtures if two conditions occur:
1) the maximum heating temperature of the salts mixture must be lower than the melting point T1 of the salt S1;
2) the mixture composition E1 to be used must contain a quantity , even small, of salt S1 more than that contained by the eutectic.

On the bases of said teachings, the object of this invention is to propose a family of ternary mixtures which do not show the mentioned drawbacks, and which are adapted for the use in heat accumulation systems, within a range from about 30 °C to about 60 °C.

The compositions of the mixtures according to the invention ( as expressed in weight percent) is as follows:

| | Mg(NO₃)₂ x 6 H₂O | MgCl₂ x 6 H₂O | NH₄NO₃ |
|---|---|---|---|
| Mixture A | 50,3% | 10,7% | 39,0% |
| Mixture B | 36,7% | 25,8% | 27,5% |

and all the mixtures wherein the components are present in the percentages 35-55%, 5-25%, 30-45% among which mixture A has been deeply studied in the experimental phase.

The fusion temperature varies within 43-44 °C for mixture A, and within 45-46 °C for mixture B, much lower than the bynary mixtures with additives cited in the prior art. The latent fusion heat is 37,2 Kcal/kg for mixture A and 34,5 Kcal/kg for mixture B.

The amount of storable heath ( in Kcal/litre) at the different temperatures ranges shows the values hereinbelow indicated.

| | (52 -19 °C) | ( 55-25 °C) | ( 52-20 °C) |
|---|---|---|---|
| Mixture A | 58 | | 55,3 |
| Mixture B | | 71 | |
| Water | 36,8 | | 24,5 |

The temperature range 52-19°C is the global range which has been covered in the experimental field while 52-30°C is the useful range, inasmuch as the heat at temperatures lower than 30°C has no practical use in the active systems.

Mixture A is the ternary eutectic, which has been found theoretically and then experimentally proven. The rest of the mixtures are instead quasi-eutectic mixtures.

In the drawings:
Fig. 1 shows the ternary solubility diagram of the three component system.
Fig.2 and 3 show schematically two types of solar plants wherein the solutions according to the invention have been employed.
Fig. 4 shows an accumulation cylindrical tank which has been charged with a battery of mixture containers.
Fig. 5 is the scheme of an experimental plant wherein the accumulation cylindrical tank of fig. 4 has been applied.

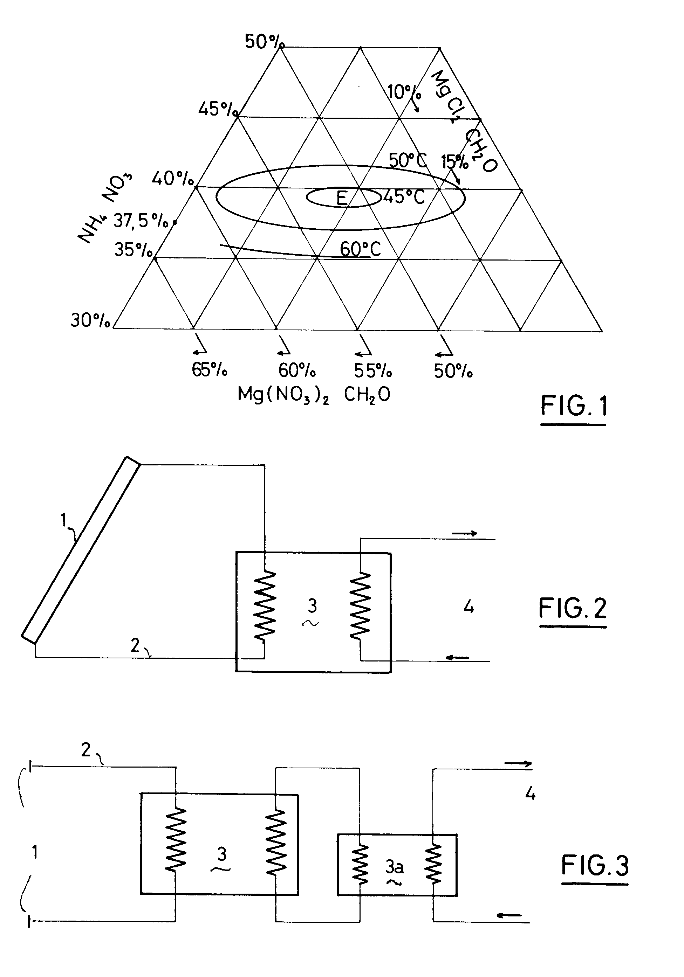

With reference to Fig.1, the center lenticular area, indicated by E is the eutectic area and it referres to a temperature of 45°C, while the other two areas, practically concentric, relate to temperature limits of 50°C and 60°C. Along the diagram edges, the three components of the mixture are reported along with related percentages.

The mixture according to the invention shows the following advantageous characteristics:
- a high specific weight with the consequent floating of possible impurities and of the undissolved salt at warm temperatures in the case of quasi eutectic compositions, whereby any sedimentation of the insoluble portion is avoided and whereby the fusion incongruence which brings about the mixtures degradation;
- a congruous behaviour for the fusion of the single components and of the mixtures formed thereby, specifically for mixture A which represents the eutectic;
- no practical degradation in front of the calorimetric check of the accumulation capacity after repetitive thermal cycles. Repetition tests have been effected by carrying out, according to the different cases, from 200 to 1000 cycles;
- freedom from supercooling because the two hydrate salts which could have this drawback, i.e. Mg(NO₃)₂ .6H₂O and MGCl₂ . 6H₂O melt at 95°C and 116,8 °C respectively, temperatures much higher than those characterizing the melting of their mixtures mentioned in the present application. The circumstance is sufficient to avoid any supercooling risk since the limits prescribed by the cited Italian Pat. No. 1210417 are respected.
- all the salts are non toxic, non corroding and not venomous.

Large quantities are easily available at a low costs as it will be seen as follows:
- the preparation of the different mixtures shows no particular difficulties: they are obtained in fact by mixing the three components in the established ratios and by the subsequent melting. Because these salts are very hygroscopic, a check of the room humidity is required during the storage;
- the change of volume in passing from solid to liquid is very low; a small empty space should be left in the container in order of preventing any breakage of the container due to inside over pressure;
- the mixtures cost is acceptable: the present costs (1986) are as follows:

| | pure salts | technical salts |
|---|---|---|
| Mg(NO₃)₂ x 6H₂O | 14.100 Lire/kg | 800 Lires/kg |
| MgCl₂ x 6H₂O | 6.960 " | 250 " |
| NH₄NO₃ | 7.700 " | 550 " |

As pure salts it is meant extremely purified substances which are sold by pharmaceutical or chemical companies and therefore their cost is very high.

Industrial type salts can also be utilized which are still less expensive inasmuch as the presence of impurities in low percentage would not influence very much their accumulation capacity. For the same reason it would be possible to prepare the salts by starting from anhydrous compounds by adding water at warm temperature, or by chemically reacting together the corresponding oxides/hydroxdes and the acids with final adding of the required water amount. In this case the product cost would be further reduced.

The ternary mixtures according to the invention could be employed in many different ways: the most interesting ones are mentioned hereinbelow:
- in connection with solar plants with flat collectors, even to those already existent, either by water or by air operated with an exit temperature included between 45°C and 60°C, for providing heat to the users either by night or in the day of overcast sky or not sufficient insolation. It has to be recalled that the conventional collectors can heat, with good efficiency, the heat convecting fluid only to about 60°C.
- recovery of discarded heat from industry works.
- accumulation of thermal energy coming from any discontinous energy source with a temperature included between the range 45-55°C.
- production of either warm air or warm water for heating.
- production of warm water for sanitary or domestic use
- foodstuff drying;
- source of heat for industry works wherein a medium-low temperature is required (for instance foodstuff making);
- thermal source for heat pumps;
- possibility, at least theoretical, to use the already exhausted accumulation substances in agriculture inasmuch as the salts can be used as fertilizers.

The use of the ternary mixtures above described is very simple and ready; the mixtures are packaged into suitable containers made of suitable technological material such as, for instance, high density polyethylene an polypropylebe which when placed at contact with mixtures does not show any phenomenon of chemical attack.

Said containers are suitably disposed into the plant in suitable housings, as it will be better understood hereinbelow.

Fig. 2 shows a scheme of solar plant for producing either warm water and/or warm air. Number 1 indicates the solar water collector of a known type provided with a feeding system 2 connected to the accumulation system through an exchanger 3 wherein the ternary mixture according to the invention is placed.

To the accumulation system 3 are also connected the inlet and outlet lines of the utilization system 4.

The operation is as follows: whenever the insolation of collector 1 lacks or becomes scarce, the accumulation system 3 supplies heat to the utilization circuit 4. The heat carrying fluid which flows along the circuits 2 and 4 can be either air or water.

In figure 3 there is a scheme of a feeding plant for a heat pump. Similar to the preceding case, 1 is a source, 2 the inlet circuit of water or air and 3 is the accumulation system. The latter, instead of being directly connected with the utilization circuit 4 feeds a heat pump 3A inserted between the two circuits. The operation is throughly similar to that described above, with the only variant that, in this case, the heat pump 3A supplies thermal energy to the utilization plant 4 after receiving it at its turn from the accumulation system 3.

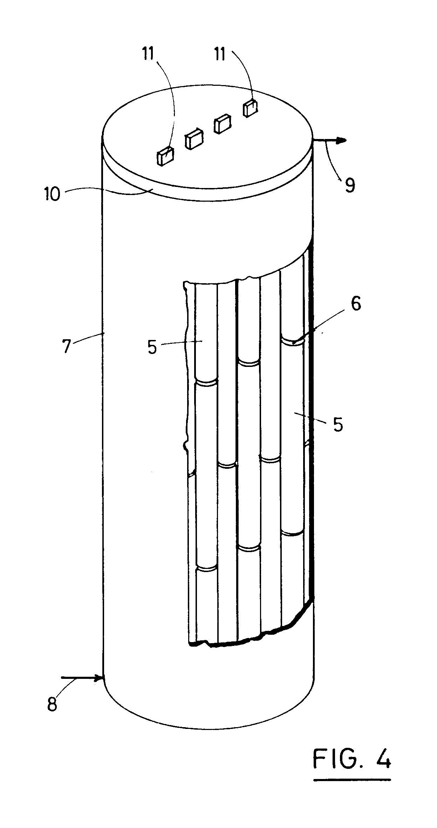

Fig.4 shows a device for utilizing the mixture according to the invention. It comprises a plurality of cylindrical containers 5 made of high density polyethilene, each of them is filled with the ternary mixture at a perfectly liquid state, while leaving a small space for dilatation. After solidification, plug 6 (also of polyethilene) is thermowelded whereby the container is sealed. Said plurality of containers 5 is located in more layers within an accumulation tank 7 made of stainless-steel provided with an inlet 8 for the water and an outlet 9, on top of it, the plug 10 of tank 7 has a series of passages 11 for electrical lines 12 which are connected with resistors to be described as follows.

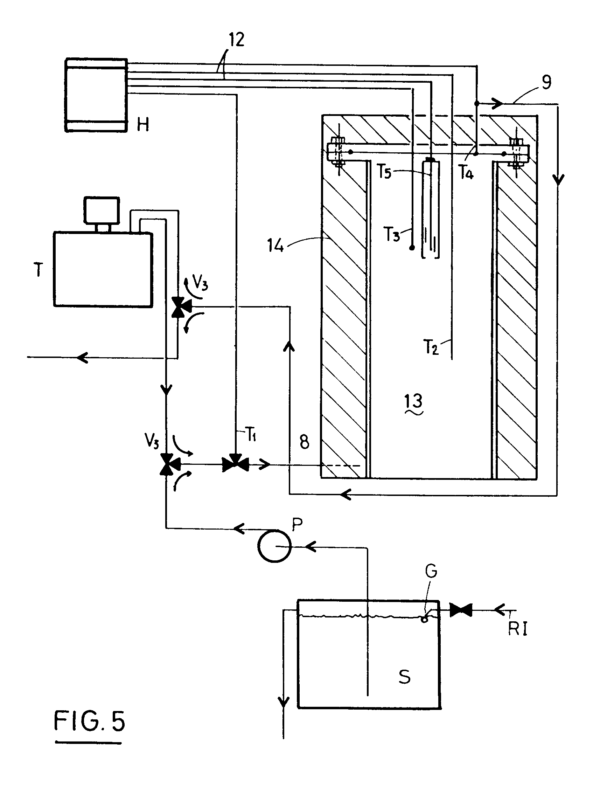

With reference to figure 5, within plant 13 the accumulation tank 7 is located, which has been already described and which contains a set of containers 5 of which one only is shown. Said set is surrounded by an insulating shell 14 with the purpose to avoid any dispersion towards the room.

Resistor T1 is disposed at the water inlet 8. Resistor T2 is located at 1/3 of the height of tank 7, resistor T3 is located at 2/3 of the same height, resistor T4 is located at the water outlet 9 and lastly, resistor T5 is located within one of the containers 5 in order to check the efficiency of the thermal exchange within the salt mass. All these resistors are connected through lines 12 with a registering assembly R by which the data related to all the temperature reading are collected.

Every operating cycle of the plant of figure 5 comprises a charging phase and a discharging phase of the system. During the charging phase warm water is circulated within tank 7 which has been warmed up in the thermostat T previously adjusted at a certain temperature in order to provide the heat required for melting the salts contained within the set of containers 5 and to bring the system to steady condition.

As soon as this occurs, thermostat T is excluded by commutating the two three-way valves V3 and by actuating pump P, and cold water begins to be sent into tank 7 which water is taken from tank 5 at a constant flood. Said tank 5 is fed through the water pipe network RI through an inserted float valve.

The cold water which gets from below picks up heat and is warmed while the salt solution within the containers progressively crystallizes.

The readings of the inlet temperature T1 and the outlet on T4, in addition to the water flow, are the three parameters by which the amount of heat accmulated by the system can be calculated.

In the water operated systems, the heat transmission is bigger; however in the case of the rupture of one or more containers, a solution more or less concentrated is formed by the outlet mixture with the circulating liquid which in the case of a direct utilization of the warm water by the users reaches the latter. In this case also any danger is remarkably reduced due to the relatively small amount of the mixture in each container along with the non toxicity of the salts and to the absence of degradation products. In the case of a contamination, due to the remarkable solubility of the salts, it would be sufficient to wash by water the whole plant.

In the air operated systems the thermal conducivity is lower; however, as reported in the literature, the efficiency of the accumulating system, is in total greater when compared to the accumulation systems where stones or water are used. Furthermore in the case of container rupture there is no danger of contamination of the exchanging fluid. A portion of the air can be anyway used for the production of warm water by means of an exchanger.

The present invention has been illustrated and described with reference to a preferred embodiment; however several factual variants can be made in practice, without getting out of the scope of the present industrial invention. Specifically the accumulation storage tank and the related containers battery according to the invention, lends itself as well to the possible use of hydrate salts for heat accumulation not specifically described in the preceding notes as being well known.

## Claims

1. A thermal accumulation process comprising the use of a ternary mixture of magnesium nitrate hexahydrate, magnesium chloride hexahydrate and ammonium nitrate characterized by the fact that said mixture comprises magnesium nitrate hexahydrate at a percentage from 35 to 55 per cent, magnesium chloride hexahydrate at a percentage from 5 to 25 per cent and ammonium nitrate at a percentage from 30 to 45 per cent, to be used within the thermal range from about 60°C to about 30°C.

2. A process according to claim 1 characterized by the fact that the mixture is a ternary eutectic comprising the percentage 50,3 per cent magnesium nitrate hexahydrate, 10,7 per cent magnesium chloride hexahydrate, 39 per cent ammonium nitrate with a fusion temperature in the range between 43 and 44 °C.

3. A process according to claims 1-2 characterized by the fact that the mixture is a ternary quasi-eutectic comprising a percentage 36,7 per cent the first component, a percentage 25,8 per cent the second component, and a percentage 37,5 per cent the third component, with a fusion percentage in the range from 45 to 46°C.

4. A heat accumulation system herein the process is utilized according to claims 1-3.

5. A device for utilizing a mixture of hydrate salts for thermal accumulation comprising a plurality of sealed containers (5) wherein said mixtures are contained, which containers are placed within the inside of an accumulation tank (7) wherein the fluid to be heated is made to cycle, characterized by the fact that said tank (7) is provided with means (T1,T2,T3,T4) to measure the temperatures of fluid to be heated at the inlet, inside the tank and at the outlet thereof, and with means (T5) to measure the temperature of the salts mixture inside one of the sealed containers (5).

## Patentansprüche

1. Verfahren zur Wärmespeicherung, welches die Verwendung einer ternären Mischung aus Magnesiumnitrathexahydrat, Magnesiumchloridhexahydrat und Ammoniumnitrat umfaßt,
**dadurch gekennzeichnet,**
daß die Mischung Magnesiumnitrathexahydrat in einem prozentualen Anteil von 35 - 55 %, Magnesiumchloridhexahydrat in einem prozentualen Anteil von 5 - 25 % und Ammoniumnitrat in einem prozentualen Anteil von 30 - 45 % umfaßt, die innerhalb des Temperaturbereichs von etwa 60°C bis etwa 30°C verwendet wird.

2. Verfahren nach Anspruch 1,
dadurch gekennzeichnet,
daß die Mischung ein ternäres eutektisches Gemisch ist, welches Magnesiumnitrathexahydrat in einem prozentualen Anteil von 50,3 %, Magnesiumchloridhexahydrat in einem prozentualen Anteil von 10,7 % und Ammoniumnitrat in einem prozentualen Anteil von 39 % mit einer Fusionstemperatur im Bereich zwischen 43 und 44°C umfaßt.

3. Verfahren nach einem der Ansprüche 1 und 2,
dadurch gekennzeichnet,
daß die Mischung ein ternäres quasi-eutektisches Gemisch ist, welches den ersten Bestandteil in einem prozentualen Anteil von 36,7 %, den zweiten Bestandteil in einem prozentualen Anteil von 25,8 % und den dritten Bestandteil in einem prozentualen Anteil von 37,5 % mit einer Fusionstemperatur im Bereich von 45 bis 46°C umfaßt.

4. System zur Wärmespeicherung, in welchem das Verfahren gemäß den Ansprüchen 1 bis 3 verwendet wird.

5. Vorrichtung zur Verwendung einer Mischung aus Hydratsalzen zur Wärmespeicherung, welche eine Vielzahl von abgeschlossenen Behältern (5) umfaßt, in welchen die Mischungen enthalten sind, und wobei die Behälter im Innern eines Speicherbehälters (7) angeordnet sind, in welchem die zu erhitzende Flüssigkeit zirkuliert,
**dadurch gekennzeichnet,**
daß der Behälter (7) mit Mitteln (T1, T2, T3, T4) versehen ist, um die Temperaturen der zu erhitzenden Flüssigkeit am Einlaß, im Innern des Behälters (7) und am Auslaß zu messen, und weiterhin mit Mitteln (T5) versehen ist, um die Temperatur der Salzmischung im Innern der abgeschlossenen Behälter (5) zu messen.

## Revendications

1. Un procédé d'accumulation thermique comprenant l'utilisation d'un mélange ternaire de nitrate de magnésium hexahydraté, de chlorure de magnésium hexahydraté et de nitrate d'ammoniun, caractérisé par le fait que ledit mélange comprend du nitrate de magnésium hexahydraté selon un pourcentage de 35 à 55 pour cent, du chlorure de magnésium hexahydraté selon un pourcentage de 5 à 25 pour cent et du nitrate d'ammonium selon un pourcentage de 30 à 45 pour cent, devant être utilisé à l'intérieur d'une plage thermique d'environ 60°C à environ 30°C.

2. Un procédé selon la revendication 1, caractérisé par le fait que le mélange est un eutectique ternaire comprenant le pourcentage de 50,3 pour cent de nitrate de magnésium hexahydraté, 10,7 pour cent de chlorure de magnésium hexahydraté, 39 pour cent de nitrate d'ammonium avec une température de fusion dans la gamme de 43 à 44°C.

3. Un procédé selon les revendications 1-2, caractérisé par le fait que le mélange est un quasi-eutectique ternaire comprenant un pourcentage de 36,7 pour cent du premier élément, un pourcentage de 25,8 pour cent du second élément et un pourcentage de 37,5 pour cent du troisième élément, avec une température de fusion dans la gamme de 45 à 46°C.

4. Un système d'accumulation de chaleur dans lequel le procédé est utilisé selon les revendications 1-3.

5. Un dispositif pour utiliser un mélange de sels hydratés en vue d'une accumulation thermique comprenant un ensemble de récipients étanches (5) dans lequel sont contenus lesdits mélanges, récipients qui sont placés à l'intérieur d'un réservoir d'accumulation (7) dans lequel le fluide à chauffer est amené à circuler, caractérisé par le fait que ledit réservoir (7) présente des moyens (T1, T2, T3, T4) pour mesurer les températures du fluide à chauffer, à l'entrée, à l'intérieur du réservoir et à sa sortie, et des moyens (T5) pour mesurer la température du mélange de sels à l'intérieur d'un des récipients étanches.
